# EUROPÄISCHE PATENTSCHRIFT

(11) **EP 1 053 656 B1**
(45) Veröffentlichungstag und Bekanntmachung des Hinweises auf die Patenterteilung: **20.04.2005**
(21) Anmeldenummer: 99914399.3
(22) Anmeldetag: 03.02.1999
(51) Int. Cl.: H04Q 11/04

(54) **VERFAHREN ZUR SYNCHRONISIERUNG VON ATM-ZELLEN AUFWEISENDEN DATENSTRÖMEN**
PROCESS FOR SYNCHRONISING DATA STREAMS CONTAINING ATM-CELLS
PROCEDE DE SYNCHRONISATION DE FLUX DE DONNEES CONTENANT DES CELLULES MTA

(30) Priorität: 04.02.1998 DE 19804394
(43) Veröffentlichungstag der Anmeldung: 22.11.2000
(73) Patentinhaber: SIEMENS AKTIENGESELLSCHAFT, 80333 München (DE)
(72) Erfinder: ISELT, Andreas, D-80935 München (DE)
(86) Internationale Anmeldenummer: PCT/DE1999/000287
(87) Internationale Veröffentlichungsnummer: WO 1999/040752

(56) Entgegenhaltungen:
- OHTA H ET AL: "ATM HITLESS LINE PROTECTION SWITCHING METHOD FOR FORCED SWITCH COMMANDS" ELECTRONICS & COMMUNICATIONS IN JAPAN, PART I - COMMUNICATIONS, Bd. 79, Nr. 11, 1. November 1996 (1996-11-01), Seiten 52-64, XP000647052 ISSN: 8756-6621
- YAMAGUCHI K ET AL: "TRANSPORT SYSTEMS BASED ON FLEXIBLE, NON-STOP ARCHITECTURE" PROCEEDINGS OF THE GLOBAL TELECOMMUNICATIONS CONFERENCE (GLOBECOM), HOUSTON, NOV. 29 - DEC. 2, 1993, Bd. 3, 29. November 1993 (1993-11-29), Seiten 1468-1475, XP000436060 INSTITUTE OF ELECTRICAL AND ELECTRONICS ENGINEERS
- HIROSHI OHTA ET AL: "HITLESS LINE PROTECTION SWITCHING METHOD FOR ATM NETWORKS" PROCEEDINGS OF THE INTERNATIONAL CONFERENCE ON COMMUNICATIONS (ICC), GENEVA, MAY 23 - 26, 1993, Bd. 1, 23. Mai 1993 (1993-05-23), Seiten 272-276, XP000371105 INSTITUTE OF ELECTRICAL AND ELECTRONICS ENGINEERSISBN: 0-7803-0950-2 in der Anmeldung erwähnt

## Beschreibung

Die Erfindung betrifft ein Verfahren gemäß dem Oberbegriff von Patentanspruch 1.

Um Informationen wie beispielsweise Sprachinformationen oder Daten über Kommunikationsnetze übertragen zu können, werden die zu übertragenden Informationen zu Dateneinheiten zusammengefaßt. Diese Dateneinheiten sind bei zeitgemäßen Kommunikationsnetzen in Paketen oder Zellen, wie beispielsweise ATM-Zellen ausgebildet. Dabei muß in der Regel dafür Sorge getragen werden, daß die Reihenfolge der Dateneinheiten bei der Übertragung erhalten bleibt. Wenn die Reihenfolge der Dateneinheiten nicht direkt beispielsweise durch die Verwendung von Sendefolgenummern sichergestellt wird, kann es bei der Übermittlung der Dateneinheiten zu gravierenden Fehlern kommen. Weitere Fehler und Verluste können dadurch entstehen, daß einzelne Dateneinheiten entweder gestört sind (veränderter Inhalt) oder ganz fehlen (z.B. aufgrund von Pufferüberläufen in Vermittlungseinrichtungen).

Beim Stand der Technik wird die Zuverlässigkeit von Verbindungen in Kommunikationsnetzen durch redundante Übertragung über zwei physikalisch getrennte Wege erhöht. Problematisch ist dabei vor allem die Synchronisierung der redundanten Datenströme beim Empfänger und die Umschaltung zwischen den Datenströmen.

In der Druckschrift "Ohta H., Ueda H.: Hitless Line Protection Switching Method for ATM Networks, International Conference on Communications, Proceedings ICC '93, S.272-276, 1993" ist ein Verfahren offenbart, mittels dem die in ATM-Zellen transportierten Nutzdaten zur Synchronisierung verwendet werden.

Die Druckschrift "Ohta, H., Ueda, H.: ATM Hitless Line Protection Switching Method for Forced Switch Commands, Electronics and Communications in Japan, Part 1, Vol. 79, No. 11, November 1996, XP647052" offenbart ein Verfahren zum Umschalten zwischen redundanten Datenströmen ohne Datenverlust.

Dieses bekannte Verfahren ist speziell für ATM-Zellen beschrieben. Es weist insgesammt drei Betriebszustände (Search Process, Confirmation Process, Out-of-Alignment Detection Process) auf. Im Zustand "Search Process" wird eine ATM-Zelle eines beliebig gewählten Datenstroms gespeichert und mit allen folgenden ATM-Zellen des anderen Datenstroms verglichen. Stimmen zwei ATM-Zellen überein so wird die gemessene Verzögerung als Laufzeitunterschied zwischen den Signalen angenommen. Konnte über eine Maximallänge hinweg keine passende ATM-Zelle zur zwischengespeicherten ATM-Zelle im anderen Datenstrom aufgefunden werden, dann wird eine andere ATM-Zelle des anderen Datenstroms zwischengespeichert und verglichen.

Da der Inhalt verschiedener ATM-Zellen nicht zwingend unterschiedlich sein muß ist diese Annahme, daß gleiche ATM-Zellen in den beiden Datenströmen sich entsprechen müssen, nicht immer richtig. Deshalb wird die Annahme durch mehrmaliges Wiederholen überprüft. Dabei wird jeweils eine ATM-Zelle gespeichert und mit der ATM-Zelle des anderen Datenstroms verglichen, die der zuvor bestimmten Verzögerung entspricht. Erst danach wird die nächste ATM-Zelle gespeichert und verglichen. Dadurch wird das Verfahren sehr langsam.

Wurde der Suchprozeß erfolgreich durchlaufen, dann folgt der Zustand "Confirmation Process". In diesem Zustand wird in den vorauseilenden Datenstrom (der von dem jeweils die ATM-Zelle zwischengespeichert wurde) eine Verzögerung von der Größe des gemessenen Laufzeitunterschieds eingefügt. Anschließend werden die verzögerten ATM-Zellen des vorauseilenden Datenstroms mit den aktuellen ATM-Zellen des nacheilenden Datenstroms verglichen. Ist auch dieser Vergleich mehrmals korrekt, so wird die Synchronität als erkannt betrachtet und es erfolgt ein Übergang in den Zustand "Out-of-alignment Detection Process".

Im "Out-of-alignment Detection Process" werden weiterhin die verzögerten ATM-Zellen des vorauseilenden Datenstroms mit den aktuellen ATM-Zellen des nacheilenden Datenstroms verglichen. Sind mehr als eine vorgegebene Anzahl von Vergleichen hintereinander falsch, so wird eine neue Synchronisierung ausgelöst.

Die in in diesem Stand der Technik beschriebene Möglichkeit, jederzeit von einem Datenstrom auf den anderen umzuschalten, erfordert, daß eine ATM-Zelle nur weitergesendet werden kann, wenn sie von beiden Datenströmen empfangen wurde. Das bedeutet jedoch, daß stets eine Verzögerung vom Maximum der beiden Datenströme eingefügt ist. Damit ist die Dauer bis zur Erkennung der Synchronität zweier Datenströme bei dem beschriebenen Verfahren sehr lang. Außerdem besitzt dieses Verfahren keine Toleranz gegenüber dem Fehlen einzelner ATM-Zellen, so daß jedes Fehlen einer ATM-Zelle in einem Datenstrom einen neuen Synchronisierungsvorgang auslöst.

Der Erfindung liegt die Aufgabe zugrunde, einen Weg aufzuzeigen, wie eine sichere Übertragung von Informationen in ATM-Zellen sichergestellt werden kann, ohne dabei die Dynamik des Übertragungsvorganges zu beeinträchtigen.

Die Erfindung wird ausgehend von den in Patentanspruch 1 angegebenen Merkmalen durch die Merkmale des Kennzeichens gelöst.

Vorteilhaft an der Erfindung ist insbesondere, daß durch die Pufferung der Datenströme die Synchronität sehr schnell erkannt wird. Außerdem ist durch die Einführung einer Ausfallerkennungsphase in Form eines fehlertoleranten Vergleichs eine robuste Übertragung gegenüber fehlenden oder fehlerhaften ATM-Zellen gegeben.

Vorteilhafte Ausgestaltungen der Erfindung sind in den Unteransprüchen angegeben.

Die Erfindung wird im folgenden anhand eines Ausführungsbeispiels näher erläutert.

Es zeigen
- FIG 1: das Blockschaltbild einer Vorrichtung, auf der das erfindungsgemäße Verfahren zum Ablauf gelangt.
- FIG 2: die einzelnen Stufen des erfindungsgemäßen Verfahrens
- FIG 3: Beispiele der Fehlerkorrektur

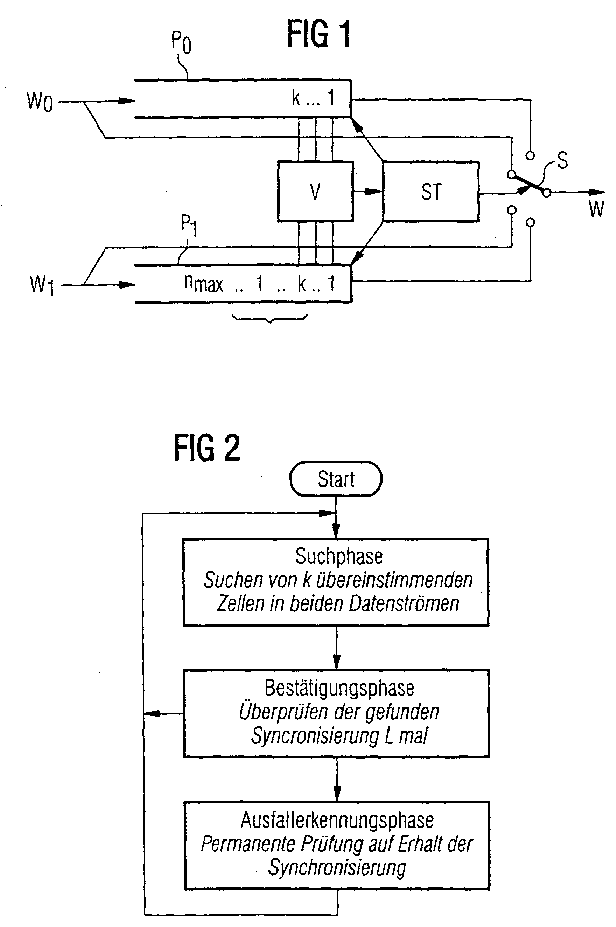

In Fig. 1 ist eine Vorrichtung aufgezeigt, auf der das erfindungsgemäße Verfahren zum Ablauf gelangt. Demgemäß wird ein ATM-Zellenstrom in 2 redundante Datenströme aufgespalten, die getrennt und unabhängig voneinander über unterschiedliche Wege W₀, W₁ geleitet werden. In einer Vorrichtung gemäß Fig.1 werden die Datenströme wieder zusammengeführt. Hierzu sind Pufferspeicher P₀, P₁ vorgesehen, in die die ATM-Zellen der Datenströme eingeschrieben werden. Die ATM-Zellen des Datenstromes D₀ werden in den Pufferspeicher P₀ und die ATM-Zellen des Datenstromes D₁ in den Pufferspeicher P₁ eingeschrieben. In einer Vergleichsvorrichtung V werden die ATM-Zellen miteinander verglichen. Diese Vorgänge werden von einer Steuereinrichtung ST gesteuert und überwacht. Nach Maßgabe des erfindungsgemäßen Verfahrens werden die ATM-Zellen den Pufferspeichern entnommen und über einen Weg W weiteren Einrichtungen zugeführt.

Im Kern besteht das Verfahren, wie Fig. 2 entnehmbar ist, aus 2 Stufen; einem Synchronisierverfahren und einem Umschalteverfahren. Die Synchronisierung wird mithilfe der übertragenen Nutzdaten der redundanten Datenströme durchgeführt. Das Synchronisierverfahren ist insgesamt dreiphasig ausgebildet. In der ersten Phase wird eine Synchronisierung gesucht (Suchphase). In der zweiten Phase wird die Synchronisierung überprüft(Bestätigungsphase) und in der dritten Phase werden Ausfälle erkannt (Ausfallerkennungsphase).

Das Synchronisierverfahren wird mit der Suchphase gestartet. Zunächst ist nicht bekannt, welcher der beiden Datenströme D₀, D₁ als vorauseilend anzusehen ist. Deshalb wird willkürlich oder aufgrund anderer, hier nicht näher spezifizierter Informationen (beispielsweise welcher Datenstrom zuerst überhaupt eine ATM-Zelle liefert) ein Datenstrom als vorauseilend angenommen. In vorliegendem Ausführungsbeispiel wird nun angenommen, daß der Datenstrom D₁ als vorauseilend anzusehen ist.

Die ATM-Zellen des als vorauseilend angenommenen Datenstroms D₁ werden nun in den Pufferspeicher P₁ eingeschrieben. In gleicher Weise werden die ATM-Zellen des als nacheilend angenommenen Datenstromes D₀ in den Pufferspeicher P₀ eingeschrieben. Im folgenden werden die k ältesten verzögerten ATM-Zellen des Datenstroms D₁ jeweils bei Eintreffen einer ATM-Zelle des als nacheilend definierten Datenstroms D₀ mit den k aktuellsten, zuletzt empfangenen ATM-Zellen des als nacheilend angenommenen Datenstroms D₀ verglichen. Die Vergleichsoperationen werden in der Vergleichsvorrichtung V vorgenommen.

Während also die ATM-Zellen des als vorauseilend angenommenen Datenstroms D₁ quasi "festgehalten" werden, "laufen" die ATM-Zellen des als nacheilend definierten Datenstroms D₀ vorbei und werden stets über eine Länge von k ATM-Zellen verglichen. Der aktuelle Füllgrad des Pufferspeichers P₁ sei 1, wobei 1>k gilt.

Ist die getroffene Annahme bezüglich der Eigenschaft eines Datenstromes vorauseilend zu sein, korrekt, so wird beim Vergleich der ATM-Zellen immer dann Übereinstimmung herrschen, wenn die Füllung des Puffersspeichers P₁ (vorauseilend angenommener Datenstrom) dem Laufzeitunterschied 1-k der Datenströme entspricht.

Wird der als nacheilend angenommene Datenstrom erst ab einer ATM-Zelle empfangen, die neuer ist, als die älteste gespeicherte ATM-Zelle des vorauseilenden Datenstroms, dann kann der Vergleich nie stimmen. Deshalb wird für die Pufferlänge des vorauseilenden Datenstroms ein Maximalwert nₘₐₓ vorgesehen.

Ist der Pufferspeicher P₁ des als vorauseilend angenommenen Datenstroms D₁ bis zu dieser Maximalmarke nₘₐₓ gefüllt, ohne daß ein übereinstimmender Bereich von k ATM-Zellen in den beiden Datenströmen D₀, D₁ gefunden wurde, dann wird die ursprüngliche Einschätzung gewechselt und der andere Datenstrom D₀ wird als vorauseilend angenommen.Weiterhin werden die diesem Datenstrom zugehörigen ATM-Zellen in den Pufferspeicher P₀ eingeschrieben, bis ein Vergleich über k ATM-Zellen korrekt ist, oder der Pufferspeicher P₀ ebenfalls gefüllt ist. In letzterem Fall wird dieser geleert wird und erneut die ursprüngliche Einschätzung geändert. Diese Vorgehensweise entspricht somit einem abwechselnden Probieren.

Alternativ kann ein gleichzeitiges Probieren vorgesehen werden. Hierzu wird die Suchphase gleichzeitig für beide Einschätzungen durchgeführt. Allerdings ist dafür mehr Pufferspeicher vorzusehen. Damit wird gegenüber dem abwechselnden Probieren eine Verringerung der benötigten Zeit bis zur Erkennung der Synchronisierung erreicht.

Generell gilt, daß je kleiner die Vergleichslänge k ist, desto größer ist die Wahrscheinlichkeit für eine fälschliche Annahme der Synchronisierung. Deshalb wird in der der Suchphase nachfolgenden Bestätigungsphase die einmal getroffene Annahme L mal verifiziert, indem jeweils neu ankommenden ATM-Zellen der beiden Datenströme D₀, D₁ paarweise miteinander verglichen werden. Wiederum bedeutet eine längere Bestätigungsphase (größeres L) eine größerer Sicherheit vor Fehlsynchronisierung. Beginnend mit der Bestätigungsphase und während der folgenden Ausfallerkennungsphase wird bei korrektem paarweisem Vergleich jeweils die älteste ATM-Zelle des vorauseilenden Datenstroms aus dem Pufferspeicher gelöscht.

Wurde auch die Bestätigungsphase fehlerfrei durchlaufen, dann erfolgt ein Übergang in die Ausfallerkennungsphase. Andernfalls beginnt das Verfahren von neuem mit der Suchphase. In der Ausfallerkennungsphase werden weiterhin die ATM-Zellen der beiden Datenströme D₀, D₁ jeweils paarweise verglichen. Stimmen sie nicht mehr überein, so kann das daran liegen, daß eine ATM-Zelle fehlerbehaftet ist oder daß einzelne ATM-Zellen eines Datenstroms fehlen. Fällt hingegen ein Datenstrom komplett aus, dann werden keine ATM-Zellen dieses Datenstroms mehr empfangen.

Bei Erkennen eines Fehlers beim paarweisen Vergleich von ATM-Zellen während der Ausfallerkennungsphase werden Vergleiche mit den ATM-Zellen, die vor und nach den verglichenen ATM-Zellen empfangen wurden, durchgeführt um die Art der Störung zu ermitteln. Hierzu werden mögliche Fehlertypen vordefiniert.

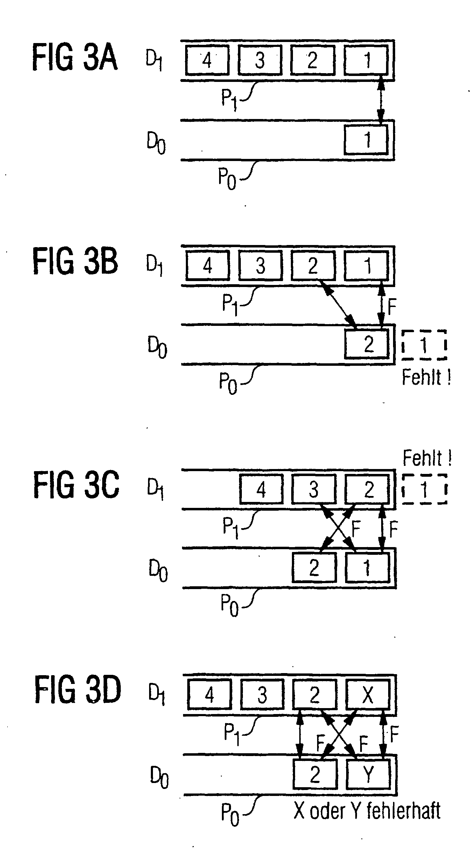

In Fig. 3a sind die Verhältnisse im ungestörten Betrieb aufgezeigt. Hier stimmen die beiden zu vergleichenden ATM-Zellen miteinander überein.

In Fig. 3b wird davon ausgegangen, daß eine ATM-Zelle des nacheilenden Datenstrom D₀ verlorengegangen ist. In diesem Fall führt der direkte Vergleich der beiden ATM-Zellen zu einer Ungleichheit. Im folgenden wird dann ein Vergleich zu der älteren ATM-Zelle des vorauseilenden Datenstromes D₁ durchgeführt. Führt der Vergleich der aktuellen ATM-Zelle des nacheilenden Datenstroms D₀ mit der zweitältesten ATM-Zelle des vorauseilenden Datenstroms D₁ zu einer Übereinstimmung, so wird davon ausgegangen, daß im nacheilenden Datenstrom D₀ eine ATM-Zelle gefehlt hat. Es wird dann die entsprechende ATM-Zelle des vorauseilenden Datenstroms D₁ aus dem Pufferspeicher P₁ entfernt und die Ausfallerkennungsphase fortgesetzt.

In Fig. 3c wird davon ausgegangen, daß eine ATM-Zelle des vorauseilenden Datenstromes D₁ verlorengegangen ist. In diesem Fall führt der direkte Vergleich der beiden ersten ATM-Zellen sowie der ersten mit der nachfolgenden zu einer Ungleichheit. Führt der Vergleich der aktuellen ATM-Zellen der folgenden ATM-Zelle des nacheilenden Datenstroms D₀ mit der ältesten ATM-Zelle des vorauseilenden Datenstroms D₁ zu keiner Übereinstimmung, so wird davon ausgegangen, daß im vorauseilenden Datenstrom D₁ eine ATM-Zelle gefehlt hat. Es wird dann die entsprechende ATM-Zelle des nacheilenden Datenstroms D₀ überlesen und die Ausfallerkennungsphase fortgesetzt.

In Fig. 3d wird davon ausgegangen, daß die beiden ATM-Zellen des vorauseilenden Datenstromes D₁ und des nacheilenden Datenstromes D₀ verlorengegangen sind. Führt der Vergleich des auf das aktuelle Vergleichspaar folgenden Paares von ATM-Zellen zu einer Übereinstimmung, so wird davon ausgegangen, daß eine der ATM-Zellen des aktuellen Paares fehlerhaft ist. Es werden dann beide Vergleichspaare (aktuelles, fehlerhaftes Paar und nachfolgendes, korrektes Paar) aus dem Pufferspeicher entfernt und die Ausfallerkennungsphase fortgesetzt.

Werden von einem der beiden Datenströme gar keine ATM-Zellen mehr empfangen, dann ist die Synchronisierung nicht mehr gegeben und es wird wieder mit der Suchphase begonnen. Ändert sich die Verzögerung zwischen den beiden Datenströmen D₀, D₁, so daß der nacheilende Datenstrom D₀ den vorauseilenden Datenstrom D₁ überholt, so werden die Rollen gewechselt. Ein solcher Wechsel wird erkannt, wenn zuerst zwei sich entsprechende ATM-Zellen gleichzeitig empfangen werden und anschlie-ßend zuerst eine ATM-Zelle des bisher nacheilenden Datenstroms D₀ empfangen wird.

Im folgenden gelangt nun die zweite Stufe des erfindungsgemäßen Verfahrens zum Ablauf. Hierbei handelt es sich um das bereits eingangs angesprochene Umschalteverfahren. Dabei wird eine Auswahl getroffen, welche der ATM-Zellen der Datenströme D₀, D₁ weiteren Einrichtungen über Verbindungswege W zugeführt werden sollen. Das Umschalteverfahren kommt unabhängig vom gewählten Synchronisierungsverfahren zum Ablauf.

In einer ersten Ausgestaltung der Erfindung wird vorgesehen, die ATM-Zellen des vorauseilenden Datenstromes D₁ auszuwählen. Diese werden dann beim Eintreffen, unbeachtet der Tatsache, daß sie für die Synchronisierung gespeichert werden, sofort an den Ausgang weitergeleitet. Ändert sich die Verzögerung zwischen den beiden Datenströmen, so daß der nacheilende Datenstrom D₀ den vorauseilenden Datenstrom D₁ überholt, so wird mit dem (bereits angesprochenen) Rollenwechsel bei der Synchronisierung auch die Selektion auf den anderen Datenstrom umgeschaltet.

Fällt ein Datenstrom komplett aus, so wird nach eventuell notwendigem Rollenwechsel, von dem verbleibenden, dann als vorauseilend betrachteten Datenstrom die ATM-Zellen selektiert. Somit ist ein unterbrechungsfreies Umschalten beim Ausfall eines Datenstroms gegeben. Nach der Behebung des Ausfalls wird der wieder zur Verfügung stehende Datenstrom mit dem vorhandenen synchronisiert. Stellt sich dabei heraus, daß er der vorauseilende Datenstrom ist, so muß eine Umschaltung stattfinden. Das geschieht indem die ATM-Zellen des vorauseilenden, nicht selektierten Datenstroms über den Pufferspeicher an den Ausgang weitergeleitet werden und durch schnelleres Auslesen als Einschreiben der Pufferspeicher geleert wird. Dabei wird allerdings die Rate der ATM-Zellen kurzzeitig geändert. Bei Verbindungen mit hohen Anforderungen bezüglich der Kontinuität der Verzögerung muß der Ausgleichsvorgang auf einen langen Zeitraum ausgedehnt werden.

Bei diesem Verfahren ist die Verzögerung die durch Synchronisierung und Selektion entsteht minimal, da keine Pufferung der ATM-Zellen stattfindet und stets der Datenstrom mit der geringeren Laufzeit ausgewählt wird. Allerdings werden fehlerhafte oder fehlende ATM-Zellen auch im Ausgangsdatenstrom fortgesetzt, da deren Erkennung erst später bei Eintreffen der Dateneinheiten des nacheilenden Datenstroms möglich ist.

In einer weiteren, hierzu als alternativ zu betrachtenden Ausgestaltung der Erfindung wird vorgesehen, die ATM-Zellen des nacheilenden Datenstromes D₀ auszuwählen. Die ATM-Zellen des nacheilenden Datenstroms werden beim Eintreffen im Zuge der Synchronisierung mit denen des vorauseilenden Datenstroms verglichen und im fehlerfreien Fall an den Ausgang weitergeleitet. Ändert sich der Verzögerungsunterschied zwischen den beiden Datenströmen, so daß der nacheilende Datenstrom den vorauseilenden Datenstrom überholt, so wird mit dem Rollenwechsel bei der Synchronisierung auch die Selektion auf den anderen Datenstrom umgeschaltet.

Werden bei den Synchronisationstests während der Ausfallerkennungsphase fehlende ATM-Zellen in einem Datenstrom erkannt, so werden diese bei der Selektion dem Ausgangsdatenstrom vom anderen Datenstrom zugeführt. Fällt ein Datenstrom komplett aus, so wird bis zu einem definierten Maximalverzögerungsunterschied gewartet und dann von dem noch intakten, im Puffer aufgestauten Datenstrom ausgelesen.

Nach der Behebung eines Ausfalls wird der wieder zur Verfügung stehende Datenstrom mit dem vorhandenen synchronisiert. Stellt sich dabei heraus, daß er der nacheilende Datenstrom ist, so muß eine Umschaltung stattfinden. Das geschieht indem die ATM-Zellen des vorauseilenden, nicht selektierten Datenstroms aus dem Pufferspeicher an den Ausgang weitergeleitet werden und durch langsameres Auslesen als Einschreiben der Pufferspeicher gefüllt wird. Dabei wird allerdings die Rate der ATM-Zellen kurzzeitig geändert. Bei Verbindungen mit hohen Anforderungen bezüglich der Kontinuität der Verzögerung muß der Ausgleichsvorgang auch hier auf einen langen Zeitraum ausgedehnt werden.

Das Verfahren bietet den Vorteil, daß ein Ausgleich von Verlusten in einem Datenstrom möglich ist. Werden zudem fehlerhafte Dateneinheit durch Prüfsummen erkannt, so können auch Fehler in einzelnen ATM-Zellen korrigiert werden. Allerdings muß hierbei eine Verzögerung in Kauf genommen werden, die gleich dem Maximum der beiden Verzögerungen der Datenströme ist.

## Patentansprüche

1. Verfahren zur Synchronisierung von Datenströmen, mit einem eine Vielzahl von Dateneinheiten aufweisenden Datenstrom, der in jeweils zwei deckungsgleiche, redundant ausgebildete Teildatenströme (D₀, D₁) aufgespalten wird, wobei
die Dateneinheiten ATM-Zellen entsprechen, und
die beiden Teildatenströme (D₀, D₁) wieder zusammgeführt werden, indem einer der beiden Teildatenströme (D₁) als vorauseilend definiert wird, und indem beide Teildatenströme (D₀, D₁) zu Beginn einer Suchphase in jeweils einen Pufferspeicher (P₀, P₁) eingeschrieben werden, **dadurch gekennzeichnet, daß** in der Suchphase Synchronität zwischen den beiden Teildatenströme (D₀, D₁) hergestellt wird, indem die Dateneinheiten beider Teildatenströme (D₀, D₁) über eine bestimmte Länge (k) miteinander verglichen werden, die dem mehrfachen einer ATM-Zelle entspricht,
daß in einer Bestätigungsphase eine aufgefundene Synchronität durch weiteres Vergleichen der Dateneinheiten beider Teildatenströme (D₀, D₁) über die bestimmte Länge (k) überprüft wird,
daß in einer Ausfallerkennungsphase die ermittelte Synchronität auf Erhalt geprüft wird.

2. Verfahren nach Anspruch 1,
**dadurch gekennzeichnet,**
**daß** im Zuge einer Fehlererkennung eine als fehlerhaft und/oder fehlend ermittelte ATM-Zelle korrigiert wird, indem die als fehlerhaft und/ oder fehlend ermittelten ATM-Zelle dem intakten, redundanten Teilstrom entnommen wird.

3. Verfahren nach Anspruch 1, 2,
**dadurch gekennzeichnet ,**
**daß** wahlweise nach Maßgabe der Fehlererkennung korrigierte ATM-Zellen weiteren Einrichtungen zugeführt werden.

## Claims

1. Method for synchronising data streams, with a data stream containing a plurality of data units which is split into two congruent, redundant sub-data streams (D₀, D₁), whereby the data units correspond to ATM cells, and both the sub-data streams (D₀, D₁) are brought together again, with one of the two sub-data streams (D₁) being defined as ahead, and with both sub-data streams (D₀, D₁) being input into a buffer memory (P₀, P₁) each at the beginning of a search phase, **characterised in that**
synchronicity is achieved between both the sub-data streams (D₀, D₁) in the search phase, with the data units of both sub-data streams (D₀, D₁) being compared with each other over a defined length (k) which corresponds to the multiple of an ATM cell,
that detected synchronicity is checked in a confirmation phase by means of further comparison of the data units of both sub-data streams (D₀, D₁) over the defined length (k),
that in a failure identification phase preservation of the detected synchronicity is checked.

2. Method according to Claim 1, **characterised in that** an ATM cell found to be faulty and/or missing during fault detection is corrected by removing the ATM cell found to be faulty and/or missing from the intact, redundant substream.

3. Method according to Claim 1, 2, **characterised in that** corrected ATM cells are optionally supplied to further devices in accordance with the conditions of fault detection.

## Revendications

1. Procédé de synchronisation de flux de données au moyen d'un flux de données contenant une pluralité d'unités de données, qui est divisé en respectivement deux flux partiels de données (D₀, D₁) congruents, formés de manière redondante,
les unités de données correspondant à des cellules ATM, et
les deux flux partiels de données (D₀, D₁) étant à nouveau regroupés, du fait que l'un des deux flux partiels de données (D₁) est défini comme étant déphasé en avant, et du fait que les deux flux partiels de données (D₀, D₁) sont inscrits dans respectivement une mémoire tampon (P₀, P₁) au début d'une phase de recherche, **caractérisé en ce que**
une synchronisation est établie entre les deux flux partiels de données (D₀, D₁) pendant la phase de recherche, du fait que les unités de données des deux flux partiels de données (D₀, D₁) sont comparées entre elles sur une certaine longueur (k) qui correspond au multiple d'une cellule ATM,
**en ce que**, pendant une phase de confirmation, une synchronisation trouvée est vérifiée au moyen d'une autre comparaison des unités de données des deux flux partiels de données (D₀, D₁) sur la longueur définie (k),
**en ce que**, pendant une phase de détection de défaillances, la synchronisation détectée est vérifiée quant à la réception.

2. Procédé selon la revendication 1,
**caractérisé en ce que**
une cellule ATM détectée comme défectueuse et/ou comme manquante au cours d'une détection d'erreurs est corrigée du fait que la cellule ATM détectée comme défectueuse et/ou manquante est retirée du flux partiel intact redondant.

3. Procédé selon la revendication 1, 2,
**caractérisé en ce que**
des cellules ATM corrigées au choix selon la détection d'erreurs sont amenées à d'autres dispositifs.
